# EUROPEAN PATENT APPLICATION

(11) **EP 2 829 493 A1**
(43) Date of publication of application: **28.01.2015**
(21) Application number: 12722173.7
(22) Date of filing: 23.03.2012
(51) Int. Cl.: B65F 1/00

(54) **HOUSEHOLD RUBBISH RECYCLER**

(71) Applicant: Nartex Consulting, S. L., 28036 Madrid (ES)
(72) Inventor: PEDROCHE PALOMAR, Antonio, E-28036 Madrid (ES)
(74) Representative: Ungria López, Javier
(86) International application number: PCT/ES2012/070197
(87) International publication number: WO 2013/140002

(57) **Abstract**

The present invention consists in a trash recycler conceived as a household appliance that is particularly adequate for use in households, tertiary sector or hostelry. The trash recycler object of the invention allows processing different types of trash, such as plastics, cans, paper and cardboard, glass, and organic matter. The main object of the trash recycler is to make available to the aforementioned users an appliance that can process the most common types of trash generated to obtain a processed by-product according to the original material of the processed trash.

## Description

### OBJECT OF THE INVENTION

The present invention consists in a trash recycler conceived as a household appliance that is particularly adequate for use in households, tertiary sector or hostelry. The trash recycler object of the invention allows processing different types of trash according to their origin, such as plastics, cans, paper and cardboard, glass, and organic matter. The main object of the trash recycler is to make available to the aforementioned users an appliance that can process the most common types of trash generated to obtain a final by-product according to the original material of the processed trash.

### BACKGROUND OF THE INVENTION

Known systems for depositing and collecting trash in residential areas, tertiary sector, industry and services present many drawbacks. Firstly, there is the aesthetic impact on the street caused by the presence of trash containers. Secondly, collection of these containers by vehicles also results in numerous inconveniences.

Finally, the trash is carried to dumps or recycling plants where they can be subjected to a recycling process, normally manual, to separate the different original materials of which the trash is composed.

The main problems resulting from this type of collection system are the following:
- the aesthetic impact of both the containers and the dumps;
- the environmental impact of the odour produced by containers and dumps;
- surface occupation of containers and dumps; and
- the cleaning and/or maintenance required by the containers and the area occupied by them.

As for the vehicles used to collect and transport the containers to the dumps or recycling plants, these are large, heavy, slow and noisy vehicles that produce an unpleasant smell, an in addition are very expensive.

Nowadays the system described above has changed with the introduction of different trash containers according to its material, in which users must deposit the trash after separating by this criterion. However, this system does not allow eliminating any costs in the chain described above. The advantage it provides is that the trash is classified in the households, not in the recycling plant. However, the current system generates another problem as it increases the number of containers and the space they occupy in households and on the street. It also increases the number of transportation vehicles and their maintenance. Naturally, the number of employees needed to collect and maintain the vehicles and the containers is also increased.

In short, the sum of the costs of prior recycling at homes is greater to that of the system in which there is not prior recycling, so that the current system increases public awareness by the separation of the different types of trash, but does not reduce the cost per person of trash processing.

### DESCRIPTION OF THE INVENTION

The trash recycler object of the invention solves the aforementioned drawbacks by an appliance type trash recycler that essentially comprises an outer structure to which inlet gates are fitted and a processing area in which the trash is crushed, as well as compartments for temporary storage of the by-product generated after the processing. Therefore, the trash recycler object of the invention transforms users from trash generators into direct transformers of the trash generated.

More specifically, the trash recycler is characterised in that it comprises:
- a normally supporting and parallepiped-shaped outer structure;
- a plurality of inlet gates located on the outer structure, wherein each inlet gate is meant for introducing trash of different origins;
- at least one means for crushing the trash introduced through the inlet gates;
- a plurality of loading chambers connected to the plurality of inlet gates and with the crushing means in order to transfer the trash introduced through the inlet gate to the crushing means;
- a plurality of storage chambers connected to the crushing means meant to store the crushed trash, wherein each storage chamber is dedicated to storing trash of different origin;
- a plurality of outlet gates located in the outer structure connected to the storage chambers providing access from outside the outer structure to the plurality of storage chambers;
wherein the outer structure surrounds the crushing means, the loading chambers and the displacement chambers.

The above-described trash recycler therefore allows carrying out the recycling in the household that generates the trash, so that processed by-products are obtained, and also allows integrating in a single device a multiproduct separation, that is, separate recycling of the most common products. The recycler object of the invention thus provides advantages in all areas of life, at the household, industrial, services and collective levels, and naturally improves conditions by eliminating costs to society.

The recycler object of the invention, which is basically a household appliance, changes the trash recycling and collection systems described above, allowing to greatly reduce the cost that the community must pay for these services, while providing users with an added-value product that can provide certain advantages. More specifically, the entire chain leading to the recycling plants disappears, the number of trash containers in the street, the number and even the size of the trash collection trucks, and finally the capacity and dimensions of the recycling plants are all reduced.

### DESCRIPTION OF THE DRAWINGS

To complete the description being made, and in order to aid a better understanding of the characteristics of the invention, according to an example of a preferred embodiment thereof, a set of drawings are provided that form an integral part of this description where, for purposes of illustration and in a non-limiting sense, the following is shown:
Figure 1. Shows a schematic perspective view of an example of embodiment of the trash recycler.
Figure 2. Shows a schematic lateral sectional view of an example of embodiment for processing plastics.
Figure 3. Shows a schematic lateral sectional view of an example of embodiment for processing glass.
Figure 4. Shows a schematic lateral sectional view of an example of embodiment for processing paper.
Figure 5. Shows a schematic lateral sectional view of an example of embodiment for processing organic matter.

### PREFERRED EMBODIMENT OF THE INVENTION

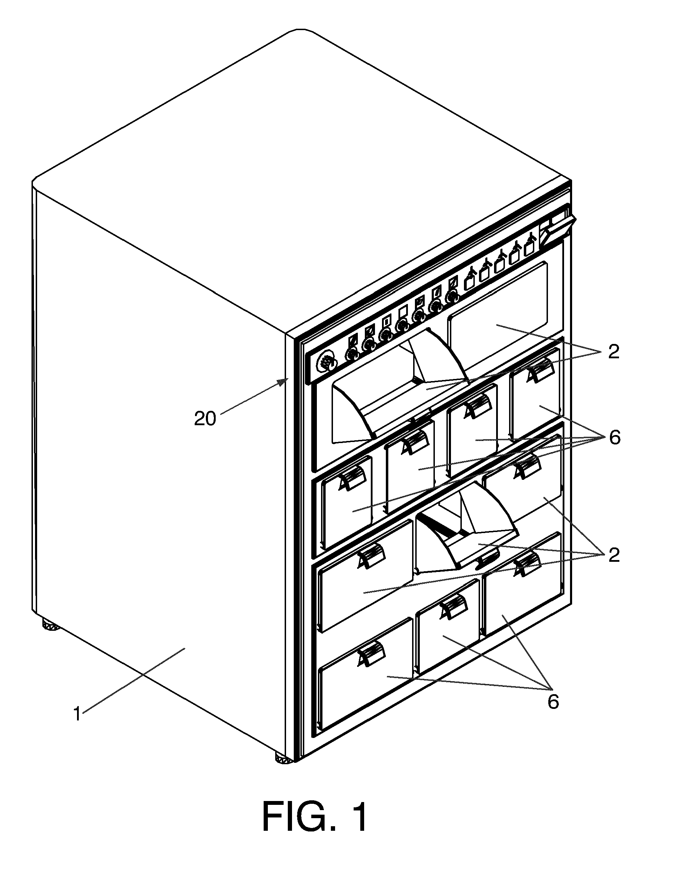

Figure 1 shows an example of embodiment of the trash recycler object of the invention. As described above, it comprises a parallepiped outer structure (1) that contains the remaining elements. More specifically, it comprises in a front panel of the outer structure (1) a plurality of inlet gates (2), as well as a plurality of outlet gates (6) located in said front panel. Each inlet gate (2) is associated with the introduction of one type of trash, according to its origin, and each outlet gate (6) is associated with one type of processed trash.

The trash recycler of the example of embodiment shown in the figures is a mechanism with the dimensions of a common appliance, such as a washing machine or dishwasher, with electricity, water supply and drainage connections.

Each inlet gate (2) gives access to the processing of the main products generated in the trash, such as the following:
- Organic matter
- Plastics
- Paper and cardboard
- Steel or aluminium cans
- Glass.

The top part of the front panel of the outer structure (1) also contains the controls (20), which basically consist of the general on/off switch and the actuation buttons for each specific use. In addition, there can be actuation controls for jamming situations. Optionally, the entire operation system can be controlled by an electronic device and/or a programmable logic control that performs all the functions of each of the systems included.

The examples of embodiment shown in the figures correspond to the case in which the trash recycler comprises crushing means (4) meant for each type of trash according to its origin. As the crushing process can be performed with the same means for different trash types, there can also be a crushing means in correspondence with several storage chambers (5), depending on the type of trash introduced. For example, there could be two inlet gates (2), one for glass and another for all other trash, with corresponding crushing means (4), one for glass and the other for the rest of the trash. Finally, there is a plurality of outlet gates (6) according to the origin of the trash introduced in it. In another example there can be three inlet gates (2), one for glass, another for organic matter and a third for all other trash, connected to three crushing means (4), which are in turn connected to several outlet gates (6) according to the origin of the trash.

In the example of embodiment shown, each inlet gate (2) is associated with one type of trash and is connected to one type of crushing means (4), which is in turn connected to one of the outlet gates (6) according to the type of trash introduced.

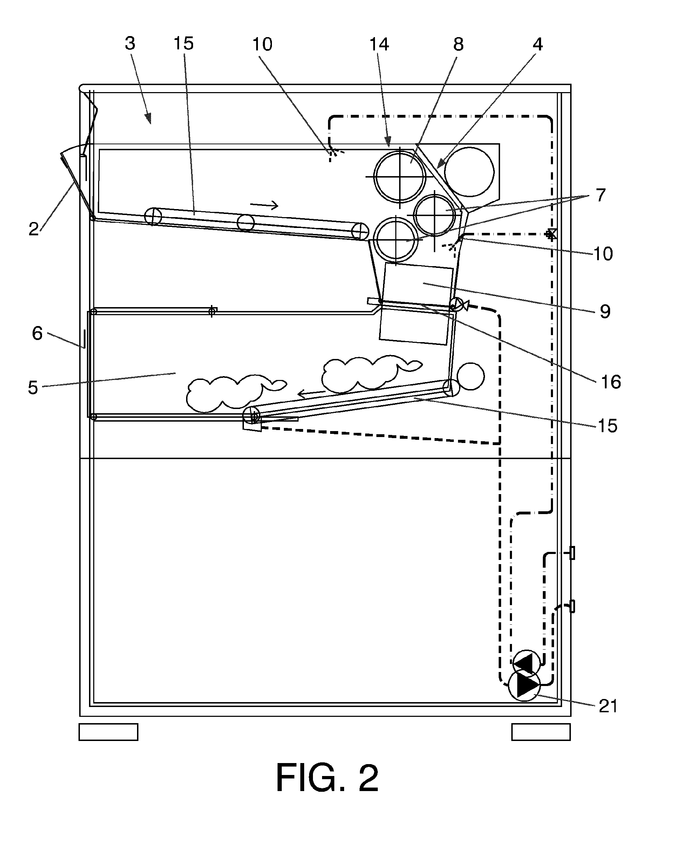

Figure 2 shows an example of embodiment for recycling plastics, such as PET and polypropylene. The system can also be applied to recycling metals, such as aluminium and steel, and has parts in common with recycling means for other materials.

As in all types of trash containers, the inlet gate (2) associated with this type of product and located in the front panel of the outer structure (1) provides access to a loading chamber (3) made of a material resistant to impacts and chemical agents, which is sealed and has a slight slope in its base towards the inside of the recycler. The inlet gate (2) has an opening sensor configured so that when the inlet gate (2) is open, the system that will be used is pre-activated. When the inlet gate (2) is closed, the system is turned on by pressing the actuation button or simply by closing the inlet gate (2), as it has a safety closure system that prevents accidental operation with the resulting risk of improper use.

Once it is turned on, a conveyor element (15) is started located on the base of the loading chamber (3) that carries the product to the crushing means (4), which in this example of embodiment comprise at least two toothed rollers (7) configured such that the trash travels between them and is crushed by them.

In addition, the crushing means (4) comprise a cylinder (8) made of rubber or a similar material before the toothed rollers (7) to provide or simplify access of the products to the toothed rollers (7). The assembly of the unit described above works in connection to a geared motor coupled to it. The support shafts of these crushing means (4) rest on the sides of the outer structure (1).

In addition, the loading chamber (3) comprises water-ejection means (10) used to wash the product before it is passed to the crushing means (4).

After the product has been processed it is sent to a collection hopper (9) for the crushed material. This collection hopper (9) for the crushed material can also comprise some water ejection means (10) to continue washing any remaining leachates. The hopper (9) is sealed and is slightly inclined towards the back of the unit. At the anterior end of the hopper (9), liquids are collected and led to a duct that channels this waste and the remaining waste of the unit to a pump (21) installed in the lowest part of the recycler, which subsequently pumps it to the drainage system of the building.

The collection hopper (9) also comprises a trapdoor (16) that reroutes the processed material to the corresponding outlet gate (6), when the system feeds several outlet gates (6) as explained above. This trapdoor (16) after a time during which the processed product has dried somewhat.

The collection chamber (9) comprises means for suctioning moisture and a heater for increasing the temperature in order to dry the crushed trash.

Rotating this trapdoor (16) to the right or left, depending on whether the material is PET or polypropylene, for example, carries the crushed material to the corresponding storage changer (5) that was previous selected.

Finally, the processed product passes to the storage chamber (5), which is connected to the collection hopper (9). This storage chamber (5) is made of a rigid material. Access to this collection chamber (9) from the outlet gate (6) is only possible when the trapdoor (16) is closed.

The storage chamber (5) can include in its base a conveyor element (15) to help store the crushed product.

Additionally, in the loading chamber (3) the plastic can be heated with steam, applied directly, to make it a more malleable and easy to modify product. The crushing means (4) can comprise a press and a stuffer and/or cutting means.

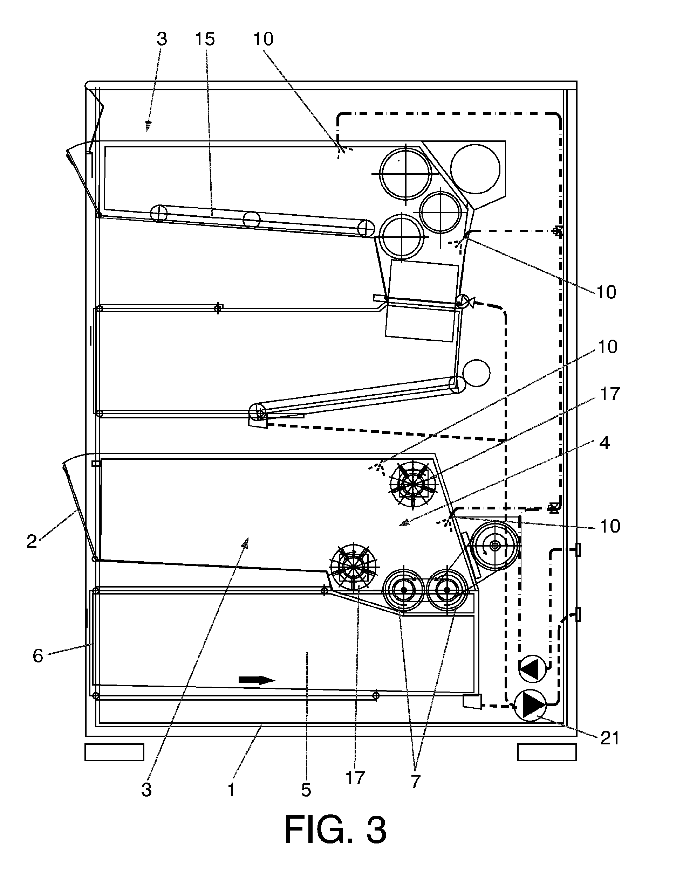

Figure 3 shows another example of embodiment that can be used to recycle glass. In this example of embodiment, the crushing means (4) additionally comprise corresponding hammer cylinders (17) to strike and break the product that is introduced before it passes through the cylinders (7).

As in the previous cases, the storage chambers (5) comprise water ejection means (10) to wash any leachates that may remain in the glass.

This storage chamber (5) has a base with a slight inclination towards the pumping system (21) to the drainage system.

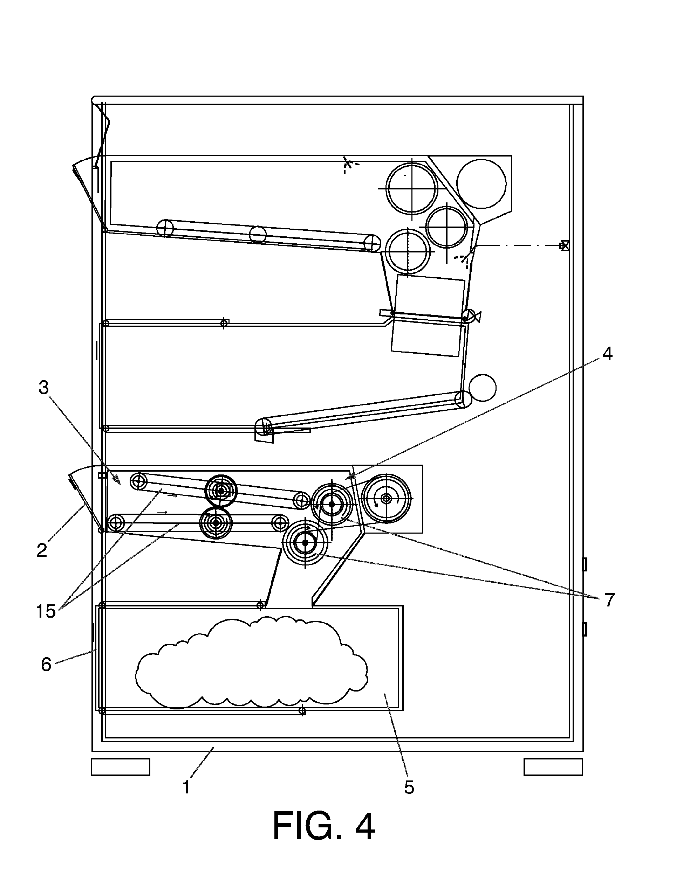

Figure 4 shows an example of embodiment of the paper recycling system. Paper recycling follows the same process as described above. In this example of embodiment, the loading chamber (3) comprises corresponding conveyor belts as the means (15) for transporting the product to the crushing means (4).

Optionally, the loading chamber (3) can comprise some water ejection means (10) meant to wet the paper until all of the material is completely soaked. It can subsequently comprise some compression means to remove up to approximately 95% of the water. This allows obtaining a hard and dry packet with a high density that is easy to handle, stack and transport.

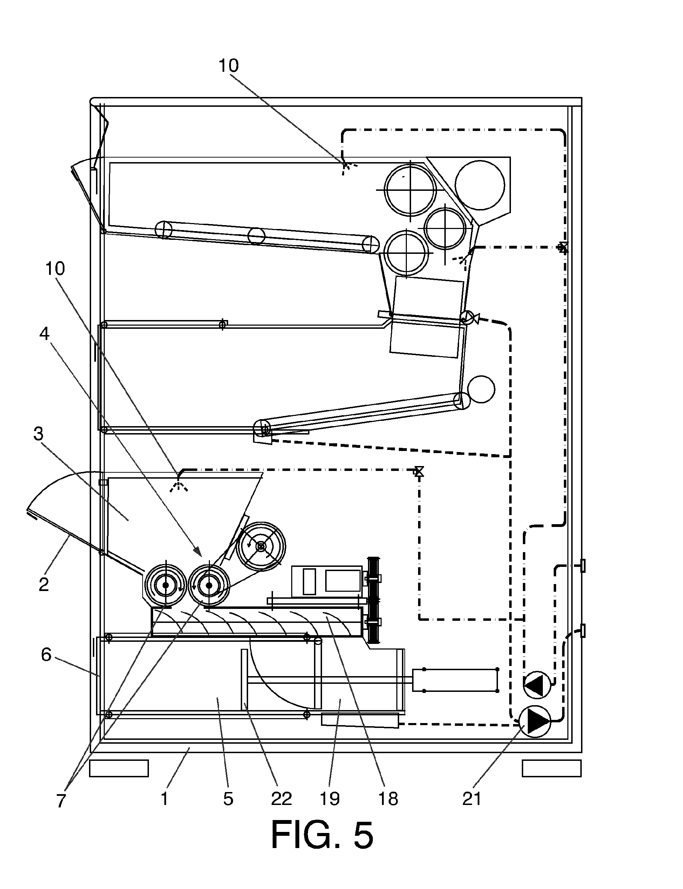

Figure 5 shows an example of embodiment that can be used, for example, to recycle organic matter. The system is somewhat more complex as this matter can decompose. The crushing means (4) comprise, in addition to the elements described above, an extrusion element (18). In addition, the chamber containing the extrusion element (18) has a slight slope, thereby simplifying at its base and under it to collect leachates and lead them to the drainage system.

At the end of the extrusion process, a product that is approximately 70% dry is obtained. In addition, the chamber of the extrusion system (18) is connected to a drying chamber (19) where the remaining moisture is extracted from the product, to obtain a product approximately 92% dry. This drying chamber (19) comprises a moisture aspirator with air currents and means to allow increasing the temperature.

Finally, a pushing element (22) pushes the dry processed product to the end of its path.

Optionally, it is possible to pass the product obtained again through the crushing mill (7) described above and obtain a ground and dry product that is similar in appearance and texture to any fertilizer used in gardening.

From the organic matter, a dehydrated, dry and compressed product is obtained with a significant reduction of volume and without odour, as an inert pellet. From the plastics, a final product is obtained that is easy to store and transport. Paper and cardboard are passed to a crusher and subsequently compressed. Lastly, metallic items such as containers, tins, drink cans, are crushed and cut. Glass is crushed and pressed to obtain small glass parts that are easy to carry.

The recycler can also comprise safety systems in case of jamming. For the equipment described and the remaining parts of this appliance, if an undesired product becomes jammed in the mills, its traction, pinion and pulley system comprises a clutch rated to the effort according to the product being processed. In case of jamming, an light signal is turned on in the control board and the system direction of rotation is automatically changed until the user manipulates it.

In addition, the loading chambers can comprise a photoelectric sensor that can detect the type of trash introduced, to prevent the introduction of a product of different origin than the one that must be processed by this system.

## Claims

1. Domestic trash recycler, **characterised in that** it comprises:
- an outer structure (1);
- a plurality of inlet gates (2) located on the outer structure (1), wherein each inlet gate (2) is meant for introducing trash of different origin;
- at least one means (4) for crushing the trash introduced through the inlet gates (2);
- a plurality of loading chambers (3) connected to the plurality of inlet gates (2) and the crushing means (4) for transferring the trash introduced in the inlet gate (2) to the crushing means (4);
- a plurality of storage chambers (5) connected to the crushing means (4) for storing the crushed trash, wherein each storage chamber (5) meant for storing trash of different origin;
- a plurality of outlet gates (6) located in the outer structure (1) connected to the storage chambers (5) to provide access from outside the outer structure (1) to the plurality of storage chambers (5);
wherein the outer structure (1) surrounds the crushing means (4), the loading chambers (3) and the displacement chambers (5).

2. Domestic trash recycler according to claim 1, **characterised in that** the inlet gates (2) and outlet gates (6) are located in a front panel of the outer structure (1).

3. Domestic trash recycler according to claim 2, **characterised in that** the front panel of the outer structure (1) comprises the control means (20) for turning on and off and controlling the operation of the crushing means (4).

4. Domestic trash recycler according to claim 2, **characterised in that** the storage chamber (5) comprises in its base a conveyor element for carrying the crushed trash towards the front panel of the outer structure (1).

5. Domestic trash recycler according to claim 1, **characterised in that** the loading chambers (3) comprise a conveyor element (15) for moving the trash deposited in the inlet gate (2) towards the crushing means (4).

6. Domestic trash recycler according to claim 1, **characterised in that** the loading chambers (3) comprise water ejection means (10) for washing the trash introduced.

7. Domestic trash recycler according to claim 1, **characterised in that** it comprises a plurality of crushing means (4) disposed in connection to each loading chamber (3), wherein each crushing means (4) is meant to process trash of different origin.

8. Domestic trash recycler according to claim 1, **characterised in that** the crushing means (4) comprise corresponding toothed rollers (7) configure such that the trash travels between them to be crushed.

9. Domestic trash recycler according to claim 8, **characterised in that** the crushing means (4) comprise a cylinder (8) located before the toothed rollers (7) to push the trash towards the toothed rollers (7).

10. Domestic trash recycler according to claim 8, **characterised in that** the crushing means (4) comprise hammer cylinders (17) located before the toothed rollers (7) to strike the trash introduced.

11. Domestic trash recycler according to claim 8, **characterised in that** the crushing means (4) comprise an extrusion element (18) located after the toothed rollers (7).

12. Domestic trash recycler according to claim 1, **characterised in that** it comprises a collection hopper (9) located in connection to the crushing means (4) and the storage chamber (5) for drying the processed trash.

13. Domestic trash recycler according to claim 12, **characterised in that** the collection hopper (9) comprises moisture aspiration means and a heater to increase the temperature.

14. Domestic trash recycler according to claim 12, **characterised in that** it comprises a trapdoor (16) located between the collection hopper (9) and the storage chamber (5), for directing the crushed trash towards the corresponding storage chamber (5) according to the origin of the trash introduced.

15. Domestic trash recycler according to claim 12, **characterised in that** the collection hopper (9) comprises some water ejection means.

16. Domestic trash recycler according to claim 1, **characterised in that** the outer structure has a parallepiped shape.

17. Domestic trash recycler according to claim 1, **characterised in that** the outer structure is a supporting structure.
